(19) Europäisches Patentamt
European Patent Office
Office européen des brevets

(11) **EP 2 375 188 B1**

(12) **EUROPEAN PATENT SPECIFICATION**

(45) Date of publication and mention of the grant of the patent:
**29.07.2020 Bulletin 2020/31**

(51) Int Cl.:
***F25B 49/00*** *(2006.01)*      ***F25B 13/00*** *(2006.01)*

(21) Application number: **11154015.9**

(22) Date of filing: **10.02.2011**

(54) **Air conditioner**

Klimaanlage

Climatiseur

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **31.03.2010 JP 2010080064**

(43) Date of publication of application:
**12.10.2011 Bulletin 2011/41**

(73) Proprietor: **Hitachi-Johnson Controls Air Conditioning, Inc.**
**Tokyo 105-0022 (JP)**

(72) Inventors:
• **Naito, Koji**
  **Shizuoka-shi**
  **Shizuoka (JP)**
• **Yoshida, Yasutaka**
  **Shizuoka-shi**
  **Shizuoka (JP)**
• **Urata, Kazumoto**
  **Shizuoka-shi**
  **Shizuoka (JP)**
• **Kawaguchi, Hiroyuki**
  **Shizuoka-shi**
  **Shizuoka (JP)**
• **Nagamatsu, Shinichiro**
  **Shizuoka-shi**
  **Shizuoka (JP)**

(74) Representative: **Mewburn Ellis LLP**
**Aurora Building**
**Counterslip**
**Bristol BS1 6BX (GB)**

(56) References cited:
**EP-A1- 2 017 556      EP-A1- 2 068 101**
**EP-A1- 2 163 839      WO-A1-2010/023894**

**Description**

The present invention relates to an air conditioner having connected plural outdoor units and designed to judge the amounts of refrigerant in the outdoor units.

Regarding an air conditioner having plural outdoor units, when the amounts of refrigerant in the outdoor units are judged, an unbalance sometimes occurs in refrigerant amount between the condensers of the outdoor units, making it impossible to appropriately judge whether the amounts of refrigerant are appropriate for the cycle. Therefore, an example of the prior art for attaining a balance in refrigerant amount between the outdoor units is described in Patent Document 1 (Japanese Patent No. 4,285,583). In particular, the degree of subcooling (supercooling) at the condenser outlet of each outdoor unit is judged. The opening of the expansion valve of the outdoor unit with a smaller degree of subcooling is made smaller than the opening of the expansion valve of the outdoor unit with a larger degree of subcooling, thus attaining the balance. Another example of achieving such a balance is described in Patent Document 2 (JP-A-2009-19875) that consists of judging the degree of subcooling at the condenser outlet of each outdoor unit and making the rotational speed of the compressor on the side with a smaller degree of subcooling smaller than the rotational speed of the compressor on the side with a larger degree of subcooling. A further example of the technique described in Patent Document 2 consists of making the rotational speed of the outdoor fan on the side with a smaller degree of subcooling higher than the rotational speed of the outdoor fan on the side with a larger degree of subcooling to effect a balance in refrigerant amount between the outdoor units.

EP2068101 discloses an air conditioner having the features according to the preamble of claim 1 which is described as being capable of simplifying conditions required for judging whether or not the amount of refrigerant is adequate. A refrigerant circuit performs a cooling operation in which an outdoor heat exchanger functions as a condenser of the refrigerant compressed in a compressor and an indoor heat exchanger functions as an evaporator of the refrigerant condensed in the outdoor heat exchanger. Further, an outdoor expansion valve is disposed at a position that is at once downstream of the outdoor heat exchanger and upstream of a liquid refrigerant communication pipe in the refrigerant flow direction in the refrigerant circuit in the cooling operation, and shuts off the refrigerant flow. A refrigerant detection unit is disposed upstream of the outdoor expansion valve and detects the amount or the amount-related value of refrigerant accumulated upstream of the outdoor expansion valve.

The techniques described in the above-described Patent Documents presume that each outdoor heat exchanger is sufficiently subcooled and the degree of subcooling at the outlet of each condenser is measured. However, if the outlet of the condenser is in a two-phase state, there are no temperature changes. Therefore, there is the problem that if the outlet of the condenser is in a two-phase state, and if the refrigerant specific enthalpy varies, the variations of the refrigerant specific enthalpy cannot be judged.

It is a preferred aim of the present invention to stably judge the amount of refrigerant in the heat exchanger of each outdoor unit in a case where the amount of refrigerant differs between the outdoor units.

According to the present invention there is provided an air conditioner as specified in claim 1.

According to the present invention, in cases where the amount of refrigerant in an outdoor heat exchanger is different among the outdoor units, it is possible to stably judge the amounts of refrigerant.

Other objects, features and advantages of the invention will become apparent from the following description of the embodiments of the invention taken in conjunction with the accompanying drawings.

In the drawings

FIG. 1 is a refrigeration cycle diagram according to Embodiment 1 of the present invention;
FIG. 2 is a refrigeration cycle diagram according to Embodiment 2 of the invention, and in which a three pipe system is capable of simultaneous heating and cooling operation;
FIG. 3 is a refrigeration cycle diagram according to Embodiment 3 of the invention, and in which each subcooling circuit utilizes an external heat source;
FIG. 4A is a pressure vs. specific enthalpy diagram of a conventional system;
FIG. 4B is a pressure vs. specific enthalpy diagram of a system associated with the present invention;
FIG. 5 is a flowchart illustrating how the amounts of refrigerant in outdoor units are balanced by the openings of outdoor expansion valves in accordance with the invention;
FIG. 6 is a flowchart illustrating how the amounts of refrigerant in outdoor units are balanced by compressor frequencies in accordance with the invention; and
FIG. 7 is a flowchart illustrating how the amounts of refrigerant in outdoor units are balanced by outdoor fan speeds in accordance with the invention.

Embodiments of the present invention are hereinafter described in detail.

Embodiment 1

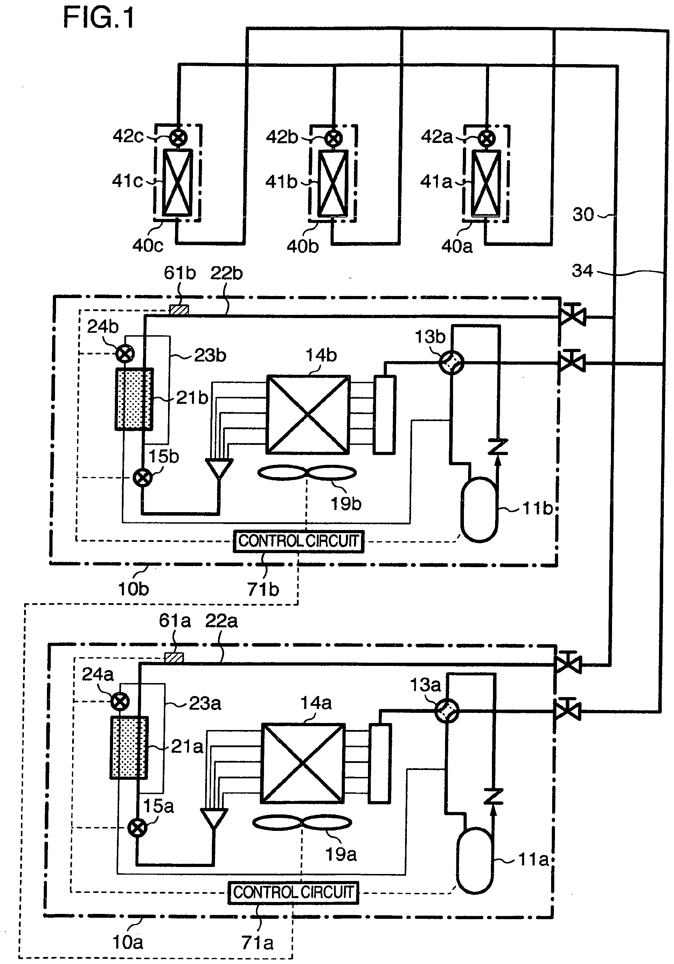

FIG. 1 shows one example of refrigeration cycle composed of two outdoor units 10a, 10b and three indoor units 40a, 40b, and 40c. The number of the connected outdoor units may be greater than two. Furthermore, the number of the connected indoor units may be greater than three and may also be only one.

A case is first described in which the amounts of refrigerant in the outdoor units are judged while the outdoor units 10a, 10b and the indoor units 40a-40c are operated in cooling mode. The outdoor units 10a and 10b are both in operation. Also, compressors 11a and 11b are in operation. Four-way valves 13a and 13b are so directed that a gas pipe 34 is connected with compressor inlet pipes and that outdoor heat exchangers 14a and 14b are connected with compressor outlet pipes.

Refrigerant flows through the outdoor units 10a and 10b in the same direction and so only the outdoor unit 10a is described as a representative. High-pressure gaseous refrigerant compressed in the compressor 11a is sent to the four-way valve 13a and outdoor heat exchanger 14a, where the refrigerant exchanges heat with the outdoor air and condensed into a high-pressure liquid refrigerant which then passes through the outdoor expansion valve 15a. At this time, the liquid pressure is slightly reduced due to the resistance of the expansion valve. The liquid refrigerant is split and supplied to a subcooling bypass pipe 23a and to a subcooling circuit 21a and passed through them. The liquid refrigerant in the bypass pipe is restricted by a subcooling expansion valve 24a and exchanges heat with the non-bypassed, remaining liquid refrigerant. As a result, the liquid is gasified and sent to the compressor suction side. On the other hand, the non-bypassed liquid refrigerant is cooled by the subcooling circuit 21a and then fed into a subcooling circuit outlet liquid pipe 22a and into a liquid pipe 30. Similarly, high-pressure, liquid refrigerant is sent from the outdoor unit 10b to the liquid pipe 30, where the two streams meet. The resulting refrigerant flow is used in the indoor units 40a, 40b, and 40c for operation in cooling mode and then becomes a low-pressure gaseous refrigerant. The low-pressure gaseous refrigerant discharged from each indoor unit passes through the gas pipe 34 and is split and supplied to the compressor inlets of the outdoor units 10a and 10b and passed through them. The refrigerant is again compressed and re-circulated.

The principle on which the amounts of refrigerant in the outdoor units are balanced will now be described. First, the amount of refrigerant in each outdoor condenser generally increases with reducing the specific enthalpy at the heat exchanger outlet and increases with increasing the degree of subcooling. Therefore, if operations are so performed that the specific enthalpy at the heat exchanger outlet and the degree of subcooling are made substantially uniform between the outdoor units, the amounts of refrigerant in the outdoor units can be balanced. There are three parameters which affect the state of refrigerant at the outlet of the heat exchanger: (1) degree of the opening of the outdoor expansion valve, (2) compressor frequency, and (3) outdoor fan speed. The amounts of refrigerants in the outdoor condensers can be balanced by the use of three parameters. The balance may be achieved by varying the three parameters but it is complicated to control the system because the actuators rely on different principles of operation in achieving the balance. To facilitate the control, only one parameter is preferably varied while the other two are fixed. The principle of operation for achieving such a balance is now described. It is assumed that only one parameter is varied while the other two are controlled to the extent that the balance between the amounts of refrigerant is not affected.

< (1) Balance between Amounts of Refrigerant in Outdoor Condensers by Opening Degrees of Outdoor Expansion Valves >

First, the frequencies (amounts of circulated refrigerant) of the compressors 11 a and 11b of the outdoor units 10a and 10b, respectively, and the rotational speeds of outdoor fans 19a and 19b (airflow rates) are controlled to nearly constant, appropriate values matched to the state of the cycle and stabilized under control of control circuits 71a and 71b. It is here assumed that the temperature sensed by a thermistor 61a at the outlet of the subcooling circuit of the outdoor unit 10a is higher than the temperature sensed by a thermistor 61b at the outlet of the subcooling circuit of the outdoor unit 10b and that the degree of subcooling at the former thermistor 61a is smaller. In this case, if the outdoor expansion valve 15a is throttled or narrowed, the refrigerant flows less easily and, therefore, the control circuit operates to increase the pressure difference developed across the outdoor expansion valve 15a so as to permit flow of the same amount of circulated refrigerant. However, the pressure in the subcooling circuit outlet liquid pipe 22a does not vary suddenly because it is also connected with the subcooling circuit outlet liquid pipe 22b of the outdoor unit 10b through the liquid pipe 30. Therefore, the pressure in the outdoor heat exchanger 14a rises. Then, the outdoor expansion valve 15a is throttled or narrowed, resulting in an increase in the pressure of the outdoor heat exchanger 14a. This elevates the condensation temperature $Tc$ relative to the outdoor air temperature $Ta$, increasing the temperature difference $Tc - Ta$. Consequently, the condensation capability $Qc$ is also increased. Since the amount of circulated refrigerant $Gr$ and the refrigerant specific enthalpy $Hi$ at the condenser inlet hardly vary, the refrigerant specific enthalpy $Ho$ at the condenser output decreases (see Eq. (1) below). That is, because the refrigerant specific enthalpy at the subcooling circuit inlet decreases ($Hsi = Ho$), the refrigerant specific enthalpy $Hso$ at the subcooling circuit outlet also decreases provided that the capability Qsc of the subcooling circuit is constant (see Eq. (2)). A comparison is made using the temperature sensed by the thermistor 61a. As the refrigerant specific enthalpy Hso at the subcooling circuit outlet decreases, the temperature sensed by the thermistor 61a drops and the degree of subcooling increases. Therefore, a balance with the temperature sensed by the thermistor 61b is approached. In the description provided so far, only the outdoor expansion valve 15a is throttled or naaoted. A better temperature balance can be attained by simultaneously increasing the opening of an outdoor expansion valve 15b unless it is already at its maximum opening. Thus, the amounts of refrigerant can be better balanced.

$$Qc = KA\left(Tc - Ta\right) = Gr\left(Hi - Ho\right) \qquad (1)$$

where $Q_c$ is the condensation capability, $K$ is the thermal transmittance (varying according to various factors (such as the airflow rate of the outdoor fan and the dimensions of the outdoor heat exchanger)), $A$ is the heat transfer area of the outdoor heat exchanger, $Tc$ is the condensation temperature (almost equivalent to the saturation temperature at the delivery pressure), $Ta$ is the outdoor air temperature, $Gr$ is the amount of circulated refrigerant (varying depending on the compressor frequency and on the state of the sucked refrigerant), $Hi$ is the refrigerant specific enthalpy at the condenser inlet, and $Ho$ is the refrigerant specific enthalpy at the condenser outlet.

$$Qsc = Gr\left(Hsi - Hso\right) \qquad (2)$$

where $Qsc$ is the subcooling capability, $Hsi$ is the refrigerant specific enthalpy at the inlet of the subcooling circuit, and $Hso$ is the refrigerant specific enthalpy at the outlet of the subcooling circuit.

Then, the frequencies (i.e., the amounts of circulated refrigerant) of the compressors 11a and 11b of the outdoor units 10a and 10b and the rotational frequencies (the airflow rates) of the outdoor fans 19a and 19b are controlled to substantially constant appropriate values matched to the state of the cycle and stabilized under control of the control circuits 71 a and 71b. It is assumed that the temperature sensed by the thermistor 61a at the outlet of the subcooling circuit of the outdoor unit 10a is lower than the temperature sensed by the thermistor 61b at the outlet of the subcooling circuit of the outdoor unit 10b and that the degree of subcooling at the former thermistor 61a is greater. The sensed temperatures are compared by the control circuits 71a and 71b. In the present embodiment, the control circuits 71a and 71b are incorporated in the outdoor units 10a and 10b, respectively, and information is transmitted between the control circuits. Alternatively, each outdoor unit may have no control circuit. Instead, central control circuitry may be provided. Yet alternatively, a control circuit may be incorporated only in a master outdoor unit, and wire-connected slave outdoor units may be controlled by sending and receiving information to and from the slave units. It is now assumed that the outdoor expansion valve 15a is not in its maximum opening and that the opening of the valve 15a can be increased further. In this case, since the refrigerant can more easily flow, the control circuit operates to reduce the pressure difference across the outdoor expansion valve 15a to suppress the amount of circulated refrigerant to an equivalent amount of circulated refrigerant. However, the liquid pipe 22a at the outlet of the subcooling circuit is also connected with the liquid pipe 22b at the outlet of the subcooling circuit of the outdoor unit 10b via the liquid pipe 30 and, therefore, the pressure in the liquid pipe 22a does not vary quickly. Consequently, the pressure in the outdoor heat exchanger 14a drops. Then, if the outdoor expansion valve 15a is opened and the pressure inside the outdoor heat exchanger 14a drops, then the condensation temperature Tc decreases relative to the outdoor air temperature Ta. This reduces the temperature difference Tc - Ta with the consequent decrease of the condensation capability Qc but the amount of circulated refrigerant Gr and the refrigerant specific enthalpy Hi at the condenser inlet hardly vary. Therefore, the refrigerant specific enthalpy Ho at the condenser outlet increases (see Eq. (1)). That is, the refrigerant specific enthalpy at the subcooling circuit inlet increases (Hsi = Ho) and so the refrigerant specific enthalpy Hso at the subcooling circuit outlet is also increased (see Eq. (2)) provided that the capability Qsc of the subcooling circuit is constant. A comparison is made with the temperature sensed by the thermistor 61a. As the refrigerant specific enthalpy Hso at the subcooling circuit outlet increases, the temperature sensed by the thermistor 61a increases and the degree of subcooling decreases. Therefore, a balance with the temperature sensed by the thermistor 61b is approached. In the description provided so far, only the outdoor expansion valve 15a is opened. A better temperature balance can be attained by simultaneously narrowing or throttling the outdoor expansion valve 15b, whereby the amounts of refrigerant can be better balanced.

As indicated by the thin lines, each outdoor heat exchanger includes plural refrigerant flow paths connected in parallel to prevent increases in the refrigerant pressure loss in the outdoor heat exchanger. Generally, a temperature sensor mounted on one of the refrigerant flow paths is used in place of a temperature sensor at the outlet of each outdoor condenser. Taking account of variations in the flow rate of refrigerant during defrosting, the sensor is mounted on the refrigerant flow path whose outlet temperature rises slowly during defrosting. However, if the temperature measured by this temperature sensor is used when the amounts of refrigerant are judged, there is a possibility that only the sensed refrigerant flow path is subcooled, making it impossible to appropriately judge the amounts of refrigerant. Therefore, it is necessary to mount a temperature sensor at the junction of the refrigerant flow paths in addition to the refrigerant flow path at the outdoor condenser outlet.

In the present embodiment, however, it suffices to mount only one thermistor for each outdoor unit, because the temperature of the sufficiently subcooled refrigerant is measured at a position downstream of the subcooler in the cooling mode of operation.

The technique of the above-cited Patent Document 1 or 2 is effective where plural outdoor units of the same capacity are connected but does not assume the case where outdoor units of different capacities are connected. For example, in the case of an expansion valve, its opening is controlled according to the result of a comparison with the opening of the expansion valve of the other outdoor unit. However, in the case of outdoor units of different capacities, if the expansion valves mounted in their respective outdoor units are different in capacity, controlling the degrees of openings of the expansion valves relative to each other is meaningless for the following reason. Take, for example, the case of an outdoor unit having an expansion valve of a large capacity and operating with a small degree of subcooling, the expansion valve may not be narrowed or throttled if the degree of opening of an expansion valve of another outdoor unit is taken as a reference and if the expansion valve has a small capacity and is being used at a rather larger degree of opening . Also, this holds true with the case where the rotational speed of the compressor is to be controlled. Take, for example, the case of an outdoor unit having a compressor of a large volumetric displacement and operating at a small degree of subcooling, the rotational speed may not be reduced if the rotational speed of a compressor of another outdoor unit is taken as a reference and if the compressor of the another outdoor unit has a small volumetric displacement and is being rotated at rather higher speeds. Further, this also holds true with the case where the rotational speed of an outdoor fan is to be controlled. In the case of an outdoor unit having a relatively large heat transfer area and operating at a large degree of subcooling, the rotational speed of the outdoor fan may not be reduced further if the rotational speed of an outdoor fan of another outdoor unit having a relatively small heat transfer area and operating at a rather higher rotational speed of the fan is taken as a reference.

In the present embodiment, however, the degree of opening is determined relative to the current opening of the subject expansion valve itself unlike the case in which the opening is controlled according to the result of a comparison made with an expansion valve mounted in other outdoor unit. Therefore, even if outdoor units of different capacities are connected, it is possible to balance the amounts of refrigerant.

If the condenser outlet is in a two-phase state, there are no temperature changes. Therefore, when the condenser outlet is in a two-phase state and the refrigerant specific enthalpy varies, the variations cannot be judged. Especially, where a long pipe is used, the inlet of the liquid pipe is less subcooled and the end of the liquid pipe is in a two-phase state. Furthermore, the temperature at the condenser outlet drops down only to the outdoor air temperature at maximum. Consequently, the temperatures sensed by temperature sensors produce small temperature differences. Hence, the judgment tends to give rise to error.

< (2) Balance in Amounts of Refrigerant inside Outdoor Condensers by Utilizing Compressor Frequencies >

First, under control of the control circuits 71a and 71b, the degree of openings of the outdoor expansion valves 15a and 15b of the outdoor units 10a and 10b are held to constant values (which may be a maximum opening), and the rotational speeds (airflow rates) of the outdoor fans 19a and 19b are controlled and stabilized at substantially constant appropriate values matched to the state of the cycle. Under this state, it is assumed that the temperature sensed by the thermistor 61a at the subcooler circuit outlet of the outdoor unit 10a is higher than the temperature sensed by the thermistor 61b at the subcooling circuit outlet of the outdoor unit 10b and that the degree of subcooling is smaller. In this case, if the frequency of the compressor 11a is lowered, only the amount of circulated refrigerant Gr decreases because the amount of heat exchange Qc = KA (Tc - Ta) found from the air side hardly varies. Consequently, the difference Hi - Ho increases. Since the refrigerant specific enthalpy Hi at the condenser outlet hardly varies, the refrigerant specific enthalpy Ho at the condenser outlet decreases (see Eq. (1)). That is, because the refrigerant specific enthalpy at the inlet of the subcooling circuit decreases (Hsi = Ho), the refrigerant specific enthalpy Hso at the outlet of the subcooling circuit also decreases (see Eq. (2)) provided that the capability Qsc of the subcooling circuit is constant. The temperature sensed by the thermistor 61a is used for a comparison. Since the refrigerant specific enthalpy Hso at the outlet of the subcooling circuit decreases, the temperature sensed by the thermistor 61a decreases and the degree of subcooling increases. A balance with the temperature sensed by the thermistor 61b is approached. In the description provided so far, only the frequency of the compressor 11a is reduced. A better temperature balance can be accomplished by increasing the frequency of the compressor 11b at the same time. The amounts of refrigerant can be balanced.

Then, the outdoor expansion valves 15a and 15b of the outdoor units 10a and 10b are held to constant values (which may be a maximum opening) and the speeds (airflow rates) of the outdoor fans 19a and 19b are controlled and stabilized at substantially constant appropriate values matched to the state of cycle under the control of the control circuits 71a and 71b. Under this condition, it is assumed that the temperature sensed by the thermistor 61a at the outlet of the subcooling circuit of the outdoor unit 10a is lower than the temperature sensed by the thermistor 61b at the outlet of the subcooling circuit of the outdoor unit 10b and that the degree of subcooling is larger. In this case, if the frequency of the compressor 11a is increased, only the amount of circulated refrigerant Gr increases and thus the difference Hi - Ho decreases because the amount of heat exchange Qc = KA (Tc - Ta) found from the air side hardly varies. Because the refrigerant specific enthalpy Hi at the condenser inlet hardly varies, the refrigerant specific enthalpy Ho at the condenser outlet increases (see Eq. (1)). That is, the refrigerant specific enthalpy at the inlet of the subcooling circuit increases (Hsi = Ho) and so the refrigerant specific enthalpy Hso at the outlet of the subcooling circuit also increases provided that the capability Qsc of the subcooling circuit is constant (see Eq. (2)). The temperature sensed by the thermistor 61a is used for a comparison. As the refrigerant specific enthalpy Hso at the outlet of the subcooling circuit increases, the temperature sensed by the thermistor 61a rises and the degree of subcooling decreases. Therefore, a balance with the temperature sensed by the thermistor 61b is approached. In the description provided so far, only the frequency of the compressor 11a is increased. A better temperature balance can be achieved by lowering the frequency of the compressor 11b simultaneously. The amounts of refrigerant can be balanced.

< (3) Balance in Amounts of Refrigerants in Outdoor Condenser by Use of Speeds of Outdoor Fans >

First, the degrees of openings of the outdoor expansion valves 15a and 15b of the outdoor units 10a and 10b are held at constant values (which may be a maximum opening) and the frequencies (amounts of circulation) of the compressors 11a and 11b are controlled and stabilized at substantially constant, appropriate values matched to the state of the cycle under control of the control circuits 71a and 71b. Under this condition, it is assumed that the temperature sensed by the thermistor 61a at the outlet of the subcooling circuit of the outdoor unit 10a is higher than the temperature sensed by the thermistor 61b at the outlet of the subcooling circuit of the outdoor unit 10b and the degree of subcooling is smaller. In this case, if the rotational speed of the outdoor fan 19a is increased, the thermal transmittance K increases, increasing the condensation capability Qc. Since the amount of circulated refrigerant Gr and the refrigerant specific enthalpy Hi at the inlet of the condenser hardly vary, the refrigerant specific enthalpy at the outlet of the condenser decreases (see Eq. (1)). That is, the refrigerant specific enthalpy Hso at the inlet of the subcooling circuit decreases (Hsi = Ho) and so the refrigerant specific enthalpy at the outlet of the subcooling circuit also decreases provided that the capability Qsc of the subcooling circuit is constant (see Eq. (2)). The temperature sensed by the thermistor 61a is used for a comparison. As the refrigerant specific enthalpy Hso at the outlet of the subcooling circuit decreases, the temperature sensed by the thermistor 61a drops and the degree of subcooling increases. Therefore, a balance with the temperature sensed by the thermistor 61b is approached. In the description provided so far, only the rotational speed of the outdoor fan 19a is increased. A temperature balance can be attained by reducing the rotational speed of the outdoor fan 19b simultaneously. The amounts of refrigerant can be balanced.

Then, the degrees of openings of the outdoor expansion valves 15a and 15b of the outdoor units 10a and 10b are kept at constant values (which may be a maximum opening) and the frequencies (amounts of circulation) of the compressors 11a and 11b are controlled and stabilized at substantially constant, appropriate values matched to the state of the cycle under control of the control circuits 71a and 71b. Under this condition, it is assumed that the temperature sensed by the thermistor 61a at the outlet of the subcooling circuit of the outdoor unit 10a is lower than the temperature sensed by the thermistor 61b at the outlet of the subcooling circuit of the outdoor unit 10b and the degree of subcooling is larger. In this case, if the rotational speed of the outdoor fan 19a is reduced, the thermal transmittance K decreases and, therefore, the condensation capability Qc decreases. Since the amount of circulated refrigerant Gr and the refrigerant specific enthalpy Hi at the condenser inlet hardly vary, the refrigerant specific enthalpy Ho at the condenser outlet increases (see Eq. (1)). That is, because the refrigerant specific enthalpy at the subcooling circuit inlet increases (Hsi = Ho), the refrigerant specific enthalpy Hso at the outlet of the subcooling circuit also increases provided that the capability Qsc of the subcooling circuit is constant (see Eq. (2)). The temperature sensed by the thermistor 61a is used for a comparison. As the refrigerant specific enthalpy Hso at the outlet of the subcooling circuit increases, the temperature sensed by the thermistor 61a rises and the degree of subcooling decreases and so a balance with the temperature sensed by the thermistor 61b is approached. In the description provided so far, only the rotational speed of the outdoor fan 19a is increased. The amounts of refrigerant can be better balanced by reducing the rotational speed of the outdoor fan 19b at the same time.

Embodiment 2

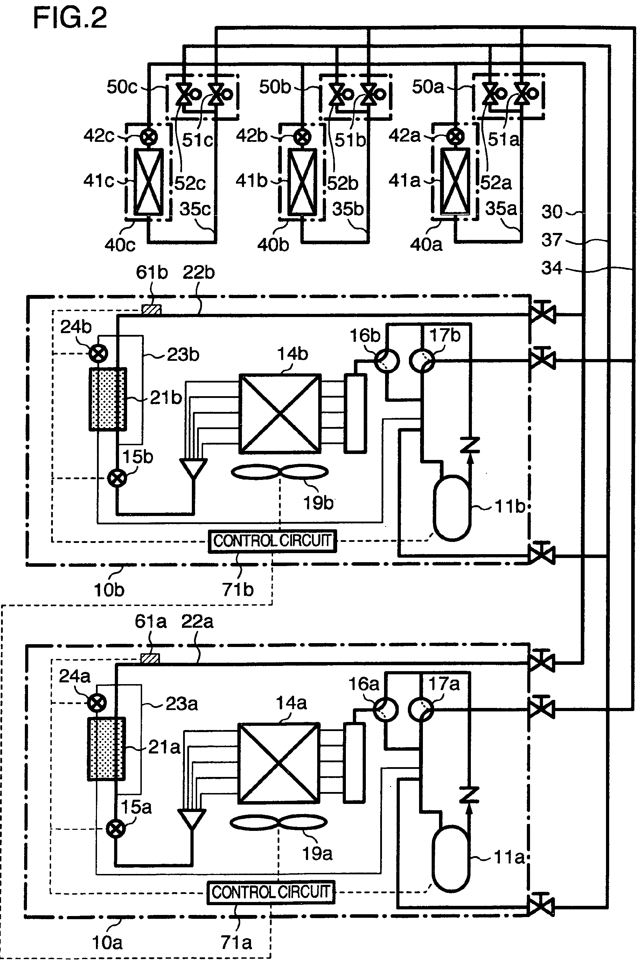

FIG. 2 shows one example of refrigeration cycle which is similar to the refrigeration cycle shown in FIG. 1 except that a low-pressure gas pipe 37 and heating/cooling mode switching units 50a, 50b, 50c are added and that the four-way valves 13a and 13b are replaced by switching valves 16a, 16b for outdoor heat exchangers and switching valves 17a, 17b for high-low pressure gas pipes. In this configuration, the indoor units are used to perform simultaneous heating and cooling. When the amounts of refrigerant are judged, the system is operated in a full cooling mode and so the principle on which the outdoor units are balanced in terms of amount of refrigerant is the same as the principle already described in connection with FIG. 1. Therefore, only the flow of the refrigerant in the full cooling mode of operation is described.

The outdoor units 10a and 10b are both in operation. The compressors 11a and 11b are in operation. The states of the switching valves 16a and 16b for the outdoor heat exchangers are so switched that the outdoor heat exchangers 14a and 14b are connected with their respective compressor discharge pipes. The states of the switching valves 17a and 17b for the high-low pressure gas pipes are so switched that the high-low pressure gas pipe 34 is connected with compressor intake pipes. As a consequence, the pressure in the high-low pressure gas pipe 34 becomes low in the same way as the low-pressure gas pipe 37. In the illustrated example, the switching valves are three-way valves. A three-way valve may also be obtained by closing one end of a four-way valve. High-pressure side switching mechanisms 51a, 51b, and 51c of the mode-switching units 50a, 50b, and 50c, respectively, are opened to place the indoor gas pipe in communication with the high-low pressure gas pipe 34. Low-pressure side switching mechanisms 52a, 52b, and 52c are also opened to place the indoor gas pipe in communication with the low-pressure gas pipe 37.

The direction of flow of the refrigerant is the same for both outdoor units 10a and 10b. In the following description, the outdoor unit 10a is taken as an example. High-pressure gaseous refrigerant compressed by the compressor 11a is forced from the outdoor heat exchanger-switching valve 16a into the outdoor heat exchanger 14a, where the refrigerant exchanges heat with the outdoor air and condenses into a high-pressure liquid refrigerant. Then, the refrigerant passes through the outdoor expansion valve 15a. At this time, the liquid pressure is slightly reduced by the resistance of the expansion valve. The liquid refrigerant is split between the subcooling bypass tube 23a and the subcooling circuit 21a and passed through them. The bypassed liquid refrigerant is constricted by the subcooling expansion valve 24a and exchanges heat with the non-bypassed, remaining liquid refrigerant and becomes gasified. The gas is then directed toward the suction side of the compressor. On the other hand, the non-bypassed liquid refrigerant is cooled by the subcooling circuit 21a and passed into the subcooling circuit outlet tube 22a and then into the liquid pipe 30. Similarly, high-pressure liquid refrigerant is also sent from the outdoor unit 10b into the liquid pipe 30, where the two streams meet. The resultant refrigerant flow is used in the indoor units 40a, 40b, and 40c in cooling mode. The refrigerant becomes a low-pressure gaseous refrigerant. A part of the low-pressure gaseous refrigerant coming out of the indoor units is passed into the high-low pressure gas pipe 34 via the high-pressure side switching mechanisms 51a, 51b, and 51c of the mode-switching units 50a, 50b, and 50c, respectively. The remaining of the low-pressure gaseous refrigerant is forced into the low-pressure gas pipe 37 via the low-pressure side switching mechanisms 52a, 52b, and 52c of the mode-switching units 50a, 50b, and 50c. The low-pressure gaseous refrigerant passed into the high-low pressure gas pipe 34 is split into two and sent respectively toward the outdoor unit 10a and the high-low pressure gas pipe switching valve 17a and toward the outdoor unit 10b and the high-low pressure gas pipe switching valve 17b. The refrigerant streams are sent to their respective compressor inlets. Similarly, the low-pressure gaseous refrigerant passed into the low-pressure gas pipe 37 is also sent to the inlets of the compressors of the outdoor units 10a and 10b. The streams of the refrigerant meeting at the inlets of the compressors are again compressed and recirculated.

Embodiment 3

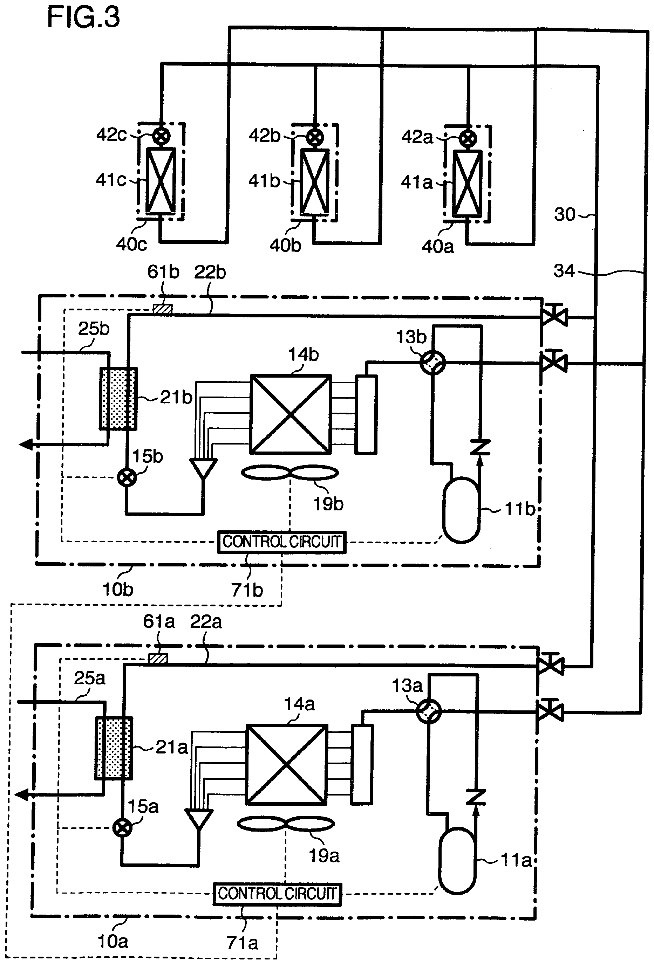

FIG. 3 shows one example of refrigeration cycle similar to the refrigeration cycle shown in FIG. 1 except that the subcooling circuits 21a and 21b utilize external cold sources as their cold source rather than parts of the circulated refrigerant. The cold sources may be cold water as supplied through pipes 25a and 25b or may be obtained by cooling done by an evaporator in a separate refrigeration cycle.

Where parts of the circulated refrigerant are employed, the openings of the subcooling expansion valves 24a and 24b are adjusted to regulate the subcooling capability Qsc. For these adjustments, it is necessary to take account of the amount of refrigerant circulated through the compressor and the pressure difference across the expansion valve (difference between the cycle liquid pressure and the inlet pressure). On the other hand, where an external cold source is utilized, it is necessary to adjust the capability according to the amount of refrigerant circulated through the compressor but it is not necessary to take account of the pressure difference affecting the expansion valve characteristics. Hence, the adjustment can be done with ease. In addition, where any subcooling circuit is not connected with the system at first, a subcooler can be later mounted.

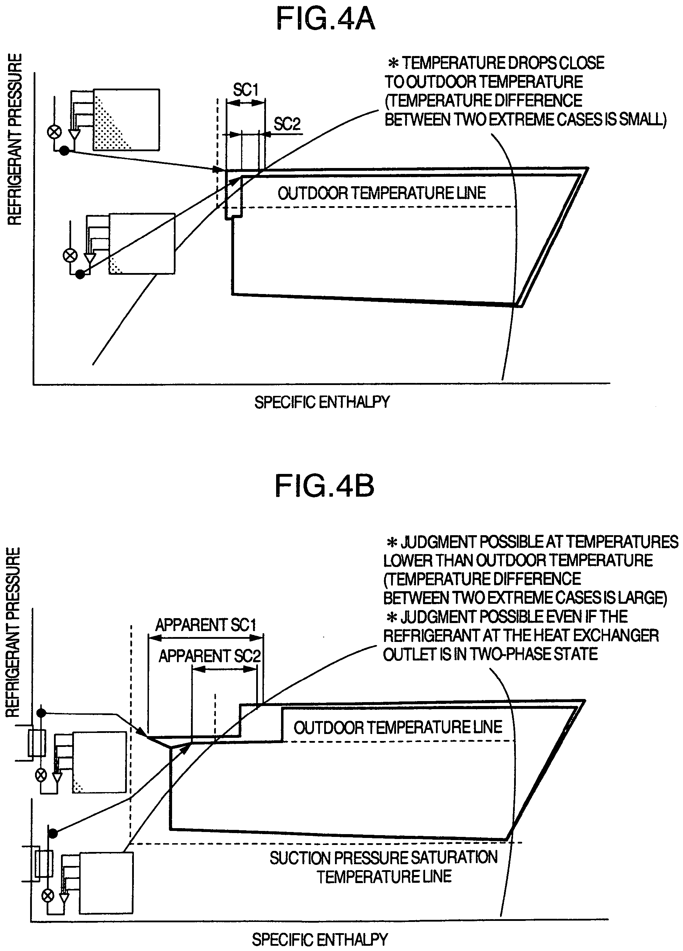

FIGS. 4A and 4B show examples of pressure-specific enthalpy diagram. FIG. 4A shows the state of the outlet of a conventional outdoor condenser. FIG. 4B shows the state of the outlet of a subcooling circuit of the present embodiment.

In FIG. 4A showing the conventional condenser, two outdoor units are assumed. The two units contain a larger amount of refrigerant and a smaller amount of refrigerant, respectively. The states at the heat exchanger outlets of the two outdoor units are indicated by arrows. An outdoor temperature line is indicated by the broken line. If the amount of subcooling at the outlet of an outdoor heat exchanger increases, the state of the outlet of the heat exchanger can approach the outdoor air temperature but cannot decrease below it. Therefore, vary large values cannot be assumed in subcool 1 region (SC1) or subcool 2 region (SC2). This tends to be a factor causing decision errors. There is a point at which two cycles produce pressure drops and meet. This corresponds to the liquid pipe inlet. The main cause of the pressure drop upstream of the inlet is the resistance of the outdoor expansion valve of each outdoor unit. Since the liquid pipe junction is located inside the saturation line, the system is in a two-phase state. As the piping length is increased, the two-phase state becomes more prevalent and the amount of refrigerant in the liquid pipe decreases at the end of the piping. Consequently, the amount of refrigerant judged after a piping installation produces variations.

In the present embodiment, it is assumed that there are two outdoor units. With respect to the outdoor unit containing a larger amount of refrigerant, it is easy to judge the amount of refrigerant. However, regarding the outdoor unit containing a smaller amount of refrigerant, it is difficult to judge the amount of refrigerant. In FIG. 4B, in a case where the amount of refrigerant is small and in another case where the amount of refrigerant is extremely small, the specific enthalpy and refrigerant pressure at the outlet of the subcooling circuit of each outdoor unit are indicated by arrows. In two cycles, the pressure drops at different specific enthalpies at the heat exchanger outlet mainly because of the resistance of the outdoor expansion valve. In the case where the amount of refrigerant is extremely small, the points indicating the specific enthalpy and the refrigerant pressure at the heat exchanger outlet are located inside the illustrated saturation line and so the system is in a two-phase state. This makes it impossible to estimate the outlet specific enthalpy from the refrigerant temperature. However, after the pressure is lowered by the outdoor expansion valve, it is possible to enter the subcooling region outside the illustrated saturation line by cooling a given amount of refrigerant into a liquid phase. Thus, it is possible to judge the amount by which the refrigerant is smaller. The degree of subcooling is found from the difference between the refrigerant temperature and the saturation temperature that is found from the refrigerant pressure. In the present decision on the refrigerant amounts, the degree of subcooling is not always necessary. Either the liquid pipe pressure or the saturation temperature is unnecessary. It is possible to evaluate how much the refrigerant is fewer during apparent subcool regions (SC1 and SC2) obtained by subtracting the saturation temperature at the outlet pressure from the liquid pipe temperature. That is, the amounts of refrigerant can be controllably balanced only using the liquid pipe temperature difference. Additionally, the point at which two cycles meet is located inside the subcooling area lying outside the saturation line. Therefore, where the piping is long, the two-phase state occupies a small ratio at the piping end. Variations in amount of liquid pipe refrigerant due to piping installation are quite small. Consequently, the amounts of refrigerant can be judged stably.

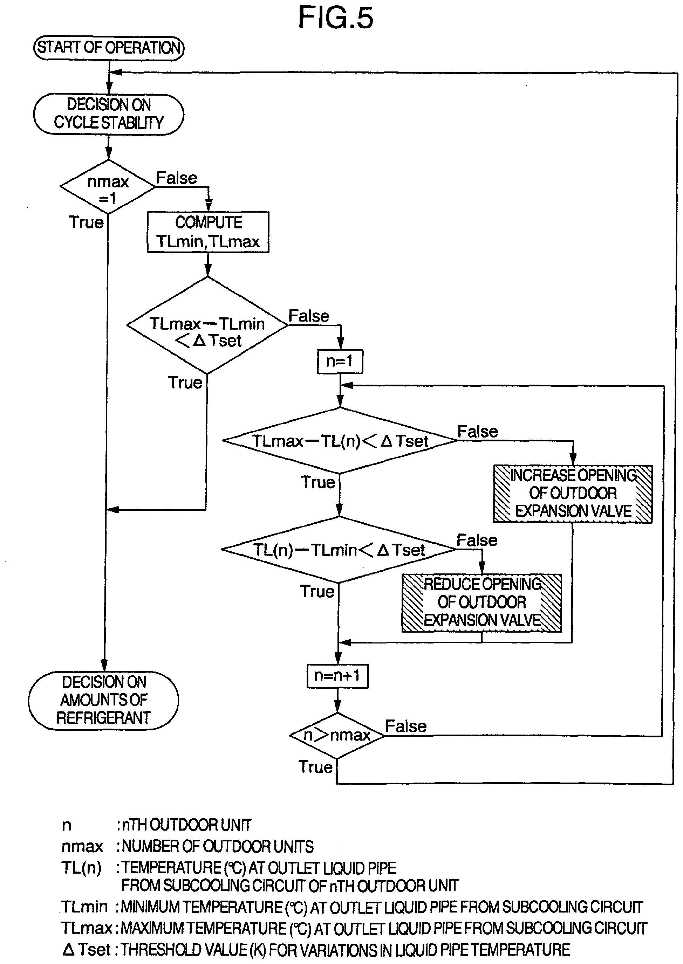

FIG. 5 is a flowchart illustrating a sequence of operations performed when the degrees of openings of the outdoor expansion valves are controlled to balance the outdoor units in terms of amount of refrigerant. First, the system is started in the cooling mode. Then, the system waits until the refrigeration cycle stabilizes, i.e., until the refrigerant staying in tanks such as accumulators and compressors is swept out of them or until the refrigerant existing in the indoor heat exchanger, gas pipes, and low-pressure gas pipes stabilizes in terms of amount, such that the amounts of refrigerant are judged precisely. After confirming that the refrigeration cycle has stabilized, an operation for judging the amounts of refrigerant is carried out intact in a case where there is only one outdoor unit. Where there are plural outdoor units, the temperature TL(n) at the outlet of the subcooling circuit of each outdoor unit is compared by the control circuits 71a and 71b, and TLmax and LTmin are computed. If the difference TLmax - TLmin falls within a given threshold value $\Delta$Tset, the amount of imbalance in refrigerant amount between the outdoor units is regarded as small and then the operation for judging the amounts of refrigerant is carried out. When the difference TLmax - TLmin is equal to or greater than the threshold value $\Delta$Tset, the amount of imbalance in refrigerant amount between the outdoor units is large and so the temperature TL(n) is again evaluated for each outdoor unit. With respect to the nth outdoor unit, in a case where the difference TLmax - TL(n) is equal to or greater than the threshold value $\Delta$Tset, it is estimated that subcooling occurs excessively and an excess amount of refrigerant stays because the TL(n) is small. Therefore, the opening of the outdoor expansion valve of the nth outdoor unit is increased. Where the difference TL(n) - TLmin is equal to or greater than threshold value $\Delta$Tset, it is estimated that subcooling does not occur and the amount of refrigerant is small because the temperature TL(n) is high. Therefore, the opening of the outdoor expansion valve of the nth outdoor unit is reduced. After making a decision as to whether the expansion valve needs to be operated for all of the connected outdoor units, it takes time to balance the amounts of refrigerant. Therefore, the system returns to the state prior to the decision on the stability of the cycle. These operations are repeated. If the difference TLmax - TLmin falls within the given threshold value $\Delta$Tset, an operation for judging the amounts of refrigerant is performed.

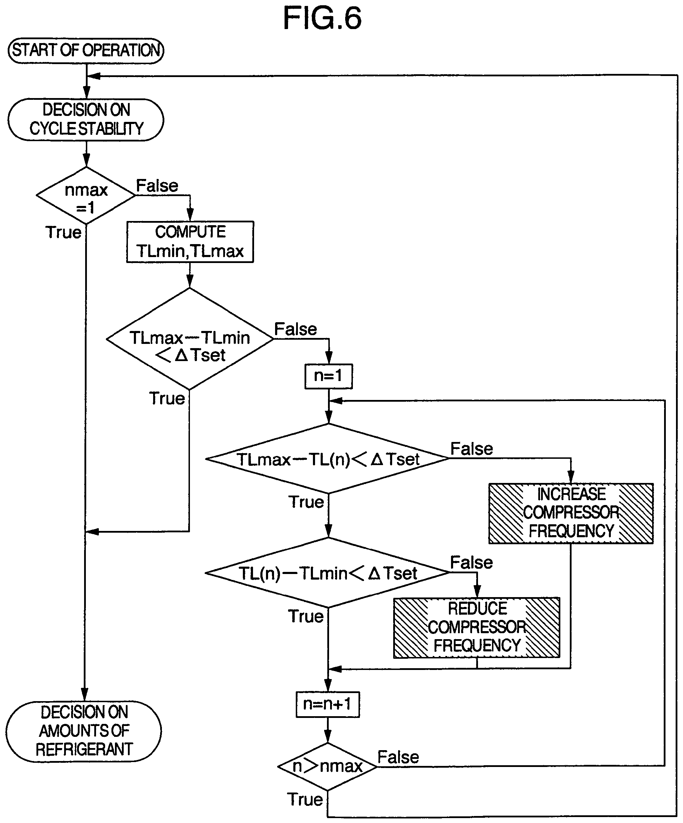

FIG. 6 is a flowchart illustrating a sequence of operations performed when the compressor frequency is controlled to balance the amounts of refrigerant in outdoor units. First, the system is started in cooling mode. After confirming that the refrigeration cycle has stabilized, an operation for judging the amounts of refrigerant is performed intact provided that the number of outdoor units is one. Where the number of outdoor units is plural, the temperature TL(n) at the outlet of the subcooling circuit of each outdoor unit is compared, and TLmax and LTmin are calculated. If the difference TLmax - TLmin falls within the given threshold value $\Delta$Tset, the amount of imbalance in refrigerant amount between the outdoor units is regarded as small. Then, an operation for judging the amounts of refrigerant is carried out. When the difference TLmax - TLmin is equal to or greater than the threshold value $\Delta$Tset, the imbalance in refrigerant amount between the outdoor units is large and, therefore, the temperature TL(n) is again evaluated for each outdoor unit. With respect to the nth outdoor unit, in a case where the difference TLmax - TL(n) is equal to or greater than the threshold value ΔTset, it is estimated that subcooling occurs excessively and an excess amount of refrigerant stays because TL(n) is small. Therefore, the compressor frequency of the nth outdoor unit is increased. Furthermore, where the difference TL(n) - TLmin is equal to or greater than the threshold value ΔTset, it is estimated that subcooling does not occur and the amount of refrigerant is small because the TL(n) is large. Therefore, the compressor frequency of the nth outdoor unit is reduced. After performing the operation for making a decision as to whether the expansion valve needs to be operated for all the connected outdoor units, it takes time to balance the amounts of refrigerant. In consequence, the system returns to the state prior to the operation for making a decision on the stability of the cycle. These operations are repeated. If the difference TLmax - TLmin falls within the given threshold value ΔTset, an operation for judging the amounts of refrigerant is carried out.

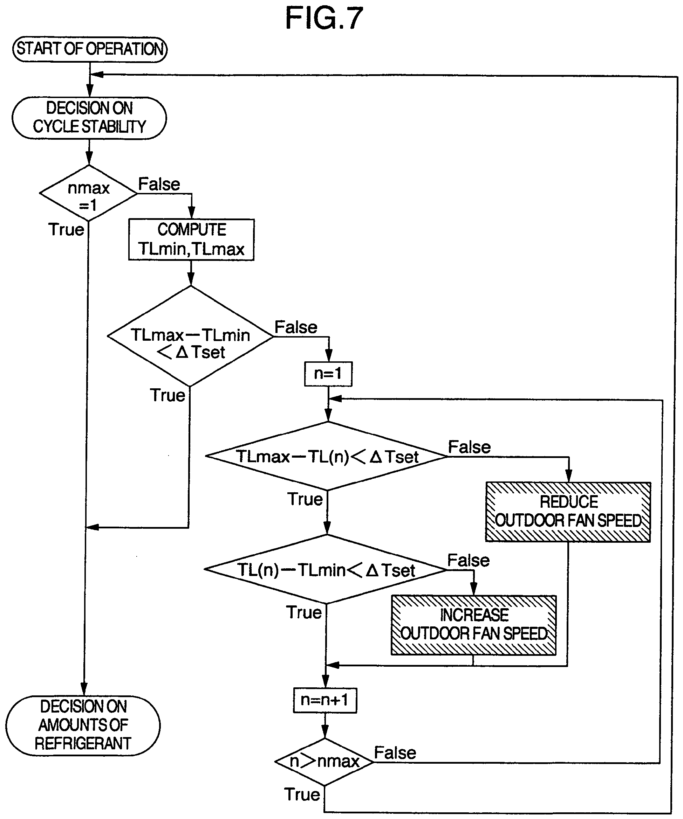

FIG. 7 is a flowchart illustrating a sequence of operations performed when the rotational frequency of an outdoor fan is controlled to balance the amounts of refrigerant in outdoor units. First, the system is started in cooling mode. After confirming that the refrigeration cycle has stabilized, an operation for judging the amounts of refrigerant is intact carried out provided that there is only one outdoor unit. Where there are plural outdoor units, the temperatures TL(n) at the outlets of the subcooling circuits of the outdoor units are compared, and TLmax and TLmin are computed. If the difference TLmax - TLmin falls within the given threshold value ΔTset, the amount of imbalance in refrigerant amount between the outdoor units is regarded as small. An operation for judging the amounts of refrigerant is carried out. Where the difference TLmax - TLmin is equal to or greater than the threshold value ΔTset, the imbalance in refrigerant amount between the outdoor units is great and so the temperature TL(n) is again evaluated for each outdoor unit. Regarding the nth outdoor unit, in a case where the difference TLmax - TL(n) is equal to or greater than the threshold value ΔTset, it is estimated that subcooling occurs excessively and an excess amount of refrigerant stays because the temperature TL(n) is low. Therefore, the rotational speed of the outdoor fan of the nth outdoor unit is reduced. Furthermore, where the difference TL(n) - TLmin is equal to or greater than the threshold value ΔTset, the temperature TL(n) is high. Therefore, it is estimated that no subcooling occurs and the amount of refrigerant is small. Consequently, the rotational speed of the outdoor fan of the nth outdoor unit is increased. After performing an operation for making a decision as to whether the expansion valve needs to be operated for all the connected outdoor units, it takes time to balance the amounts of refrigerant. Hence, the system returns to the state prior to the operation for making a decision regarding the stability of the cycle. These operations are repeated. If the difference TLmax - TLmin falls within the given threshold value ΔTset, an operation for judging the amounts of refrigerant is carried out.

**Claims**

1.  An air conditioner comprising:

    plural outdoor units (10a, 10b), each having a compressor (11a, 11b), an outdoor heat exchanger (14a, 14b), an outdoor expansion valve (15a, 15b), a subcooling circuit (21a, 21b), and a thermistor (61a, 61b) connected in turn, wherein the thermistor (61a, 61b) is configured to sense the temperature of refrigerant passed through the subcooling circuit (21a, 21b), and wherein the plural outdoor units (10a, 10b) each further have an outdoor fan (19a, 19b);
    at least one indoor unit (40a, 40b, 40c) having an indoor heat exchanger (41a, 41b, 41c); and
    control circuits (71a, 71b) for comparing the sensed temperatures of the refrigerant in the plural outdoor units (10a, 10b);
    **characterized in that**:

    the control circuits (71a, 71b) are configured to carry out an operation to balance an amount of refrigerant of each of the plural outdoor units (10a, 10b), after the temperatures of the refrigerant passed through the subcooling circuits (21a, 21b) of the plural outdoor units (10a, 10b) are sensed by the respective thermistors (61a, 61b) mounted in the plural outdoor units (10a, 10b), in a cooling mode;
    wherein the control circuits (71a, 71b) are configured to carry out the operation to balance the amount of refrigerant of each of the plural outdoor units (10a, 10b) in the cooling mode by:

    throttling an opening of the outdoor expansion valve (15a, 15b) mounted in the outdoor unit (10a, 10b) of the plural outdoor units (10a, 10b) giving a highest one of the sensed temperatures of the refrigerant; or
    increasing the opening of the outdoor expansion valve (15a, 15b) of the outdoor unit (10a, 10b) of the plural outdoor units (10a, 10b) giving a lowest one of the sensed temperatures of the refrigerant; or
    lowering a frequency of the compressor (11a, 11b) mounted in the outdoor unit (10a, 10b) of the plural outdoor units (10a, 10b) giving a highest one of the sensed temperatures of the refrigerant; or

increasing the frequency of the compressor (11a, 11b) mounted in the outdoor unit (10a, 10b) of the plural outdoor units (10a, 10b) giving a lowest one of the sensed temperatures of the refrigerant; or increasing a rotational speed of the outdoor fan (19a, 19b) mounted in the outdoor unit (10a, 10b) of the plural outdoor units (10a, 10b) giving a highest one of the sensed temperatures of the refrigerant; or lowering the rotational speed of the outdoor fan (19a, 19b) mounted in the outdoor unit (10a, 10b) of the plural outdoor units (10a, 10b) giving a lowest one of the sensed temperatures of the refrigerant.

2. The air conditioner according to claim 1, wherein a pipe (23a, 23b) located between the outdoor expansion valve (15a, 15b) and the subcooling circuit (21a, 21b) of each of the plural outdoor units (10a, 10b) is connected with an inlet of the subcooling circuit (21a, 21b) on a side of a cold source (25a, 25b) by a pipe having a subcooling expansion valve (24a, 24b), and wherein an outlet of the subcooling circuit (21a, 21b) on a side of the cold source (25a, 25b) is connected with an inlet of the compressor (11a, 11b).

3. The air conditioner according to claim 1, wherein said subcooling circuit (21a, 21b) of each of the plural outdoor units (10a, 10b) utilizes an external heat source (25a, 25b) as its cold source.


**Patentansprüche**

1. Klimaanlage, das Folgendes umfasst:

eine Vielzahl von Außeneinheiten (10a, 10b), die jeweils einen Kompressor (11a, 11b), einen Außen-Wärmetauscher (14a, 14b), ein Außenexpansionsventil (15a, 15b), eine Unterkühlungsschaltung (21a, 21b) sowie einen Thermistor (61a, 61b) umfassen, die nacheinander geschaltet sind, wobei der Thermistor (61a, 61b) ausgelegt ist, um die Temperatur des Kühlmittels, das durch die Unterkühlungsschaltung (21a, 21b) strömt, abzufühlen, und wobei die Vielzahl von Außeneinheiten (10a, 10b) jeweils ferner ein Außengebläse (19a, 19b) aufweisen;
zumindest eine Inneneinheit (40a, 40b, 40c) mit einem Innenwärmetauscher (41a, 41b, 41c); und
Steuerschaltungen (71a, 71b) zum Vergleichen der abgefühlten Temperaturen des Kühlmittels in der Vielzahl von Außeneinheiten (10a, 10b);
**dadurch gekennzeichnet, dass**:

die Steuerschaltungen (71a, 71b) ausgelegt sind, um in einem Kühlmodus einen Vorgang auszuführen, um eine Menge an Kühlmittel von jeder der Vielzahl von Außeneinheiten (10a, 10b) anzupassen, nachdem die Temperaturen des Kühlmittels, das durch die Unterkühlungsschaltungen (21a, 21b) der Vielzahl von Außeneinheiten (10a, 10b) strömt, durch die jeweiligen Thermistoren (61a, 61b), die in der Vielzahl von Außeneinheiten (10a, 10b) befestigt sind, abgefühlt wurden;
wobei die Steuerschaltungen (71a, 71b) ausgelegt sind, um in dem Kühlmodus den Vorgang zum Anpassen der Menge an Kühlmittel von jeder der Vielzahl der Außeneinheiten (10a, 10b) durch Folgendes auszuführen:

Drosseln einer Öffnung des Außenexpansionsventils (15a, 15b), das in der Außeneinheit (10a, 10b) der Vielzahl von Außeneinheiten (10a, 10b) befestigt ist, das eine höchste der abgefühlten Temperaturen des Kühlmittels ergibt; oder
Vergrößern der Öffnung des Außenexpansionsventils (15a, 15b) der Außeneinheit (10a, 10b) der Vielzahl von Außeneinheiten (10a, 10b), das eine niedrigste der abgefühlten Temperaturen des Kühlmittels ergibt; oder
Senken einer Frequenz des Kompressors (11a, 11b), der in der Außeneinheit (10a, 10b) der Vielzahl von Außeneinheiten (10a, 10b) befestigt ist, der eine höchste der abgefühlten Temperaturen des Kühlmittels ergibt; oder
Erhöhen der Frequenz des Kompressors (11a, 11b), der in der Außeneinheit (10a, 10b) der Vielzahl von Außeneinheiten (10a, 10b) befestigt ist, die eine niedrigste der abgefühlten Temperaturen des Kühlmittels ergibt; oder
Erhöhen einer Rotationsgeschwindigkeit des Außengebläses (19a, 19b), das in der Außeneinheit (10a, 10b) der Vielzahl von Außeneinheiten (10a, 10b) befestigt ist, das eine höchste der abgefühlten Temperaturen des Kühlmittels ergibt; oder
Senken der Rotationsgeschwindigkeit des Außengebläses (19a, 19b), das in der Außeneinheit (10a, 10b) der Vielzahl von Außeneinheiten (10a, 10b) befestigt ist, das eine niedrigste der abgefühlten Temperaturen des Kühlmittels ergibt.

2. Klimaanlage nach Anspruch 1, wobei ein Rohr (23a, 23b), das zwischen dem Außenexpansionsventil (15a, 15b) und der Unterkühlungsschaltung (21a, 21b) von jeder der Vielzahl von Außeneinheiten (10a, 10b) angeordnet ist, mit einem Einlass der Unterkühlungsschaltung (21a, 21b) auf einer Seite einer Kältequelle (25a, 25b) durch ein Rohr mit einem Unterkühlungsexpansionsventil (24a, 24b) verbunden ist, und wobei ein Auslass der Unterkühlungsschaltung (21a, 21b) auf einer Seite der Kältequelle (25a, 25b) mit einem Einlass des Kompressors (11a, 11b) verbunden ist.

3. Klimaanlage nach Anspruch 1, wobei die Unterkühlungsschaltung (21a, 21b) der Vielzahl von Außeneinheiten (10a, 10b) eine externe Wärmequelle (25a, 25b) als seine Kältequelle einsetzt.

**Revendications**

1. Climatiseur comprenant :

de multiples unités extérieures (10a, 10b), chacune ayant un compresseur (11a, 11b), un échangeur de chaleur extérieur (14a, 14b), un détendeur extérieur (15a, 15b), un circuit de sous-refroidissement (21a, 21b) et un thermistance (61a, 6 lb) connectés les uns après les autres, dans lequel la thermistance (61a, 6 lb) est configurée pour détecter la température d'un réfrigérant amené à passer à travers le circuit de sous-refroidissement (21a, 21b), et dans lequel les multiples unités extérieures (10a, 10b) ont chacune en outre un ventilateur extérieur (19a, 19b) ;
au moins une unité intérieure (40a, 40b, 40c) ayant un échangeur de chaleur intérieur (41a, 41b, 41c) ; et
des circuits de commande (71a, 7 lb) pour comparer les températures détectées du réfrigérant dans les multiples unités extérieures (10a, 10b) ;
**caractérisé en ce que** :

les circuits de commande (71a, 7 lb) sont configurés pour effectuer une opération pour équilibrer une quantité de réfrigérant de chacune des plusieurs unités extérieures (10a, 10b), après que les températures du réfrigérant amené à passer à travers les circuits de sous-refroidissement (21a, 21b) des multiples unités extérieures (10a, 10b) soient détectées par les thermistances respectives (61a, 61b) montées dans les multiples unités extérieures (10a, 10b), dans un mode de refroidissement ;
dans lequel les circuits de commande (71a, 7 lb) sont configurés pour effectuer l'opération pour équilibrer la quantité de réfrigérant de chacune des multiples unités extérieures (10a, 10b) dans le mode de refroidissement, consistant à :

étrangler une ouverture du détendeur extérieur (15a, 15b) monté dans l'unité extérieure (10a, 10b) des multiples unités extérieures (10a, 10b) donnant la plus élevée des températures détectées du réfrigérant ; ou
augmenter l'ouverture du détendeur extérieur (15a, 15b) de l'unité extérieure (10a, 10b) des multiples unités extérieures (10a, 10b) donnant la plus basse des températures détectées du réfrigérant ; ou
abaisser une fréquence du compresseur (11a, 11b) monté dans l'unité extérieure (10a, 10b) des multiples unités extérieures (10a, 10b) donnant la plus élevée des températures détectées du réfrigérant ; ou
augmenter la fréquence du compresseur (11a, 11b) monté dans l'unité extérieure (10a, 10b) des multiples unités extérieures (10a, 10b) donnant la plus basse des températures détectées du réfrigérant ; ou
augmenter une vitesse de rotation du ventilateur extérieur (19a, 19b) monté dans l'unité extérieure (10a, 10b) des multiples unités extérieures (10a, 10b) donnant la plus élevée des températures détectées du réfrigérant ; ou
abaisser la vitesse de rotation du ventilateur extérieur (19a, 19b) monté dans l'unité extérieure (10a, 10b) des multiples unités extérieures (10a, 10b) donnant la plus basse des températures détectées du réfrigérant.

2. Climatiseur selon la revendication 1, dans lequel un tuyau (23a, 23b) situé entre le détendeur extérieur (15a, 15b) et le circuit de sous-refroidissement (21a, 21b) de chacune des multiples unités extérieures (10a, 10b) est connecté avec une entrée du circuit de sous-refroidissement (21a, 21b) sur un côté d'une source froide (25a, 25b) par un tuyau ayant un détendeur de sous-refroidissement (24a, 24b), et dans lequel une sortie du circuit de sous-refroidissement (21a, 21b) d'un côté de la source froide (25a, 25b) est reliée à une entrée du compresseur (11a, 11b).

3. Climatiseur selon la revendication 1, dans lequel ledit circuit de sous-refroidissement (21a, 21b) de chacune des multiples unités extérieures (10a, 10b) utilise une source de chaleur externe (25a, 25b) en tant que sa source froide.

FIG.1

FIG.2

## FIG.3

# FIG.4A

REFRIGERANT PRESSURE

SC1

SC2

* TEMPERATURE DROPS CLOSE
TO OUTDOOR TEMPERATURE
(TEMPERATURE DIFFERENCE
BETWEEN TWO EXTREME CASES IS SMALL)

OUTDOOR TEMPERATURE LINE

SPECIFIC ENTHALPY

# FIG.4B

REFRIGERANT PRESSURE

APPARENT SC1

APPARENT SC2

* JUDGMENT POSSIBLE AT TEMPERATURES
LOWER THAN OUTDOOR TEMPERATURE
(TEMPERATURE DIFFERENCE
BETWEEN TWO EXTREME CASES IS LARGE)
* JUDGMENT POSSIBLE EVEN IF THE
REFRIGERANT AT THE HEAT EXCHANGER
OUTLET IS IN TWO-PHASE STATE

OUTDOOR TEMPERATURE LINE

SUCTION PRESSURE SATURATION
TEMPERATURE LINE

SPECIFIC ENTHALPY

# FIG.5

```
n       : nTH OUTDOOR UNIT
nmax    : NUMBER OF OUTDOOR UNITS
TL(n)   : TEMPERATURE (°C) AT OUTLET LIQUID PIPE
          FROM SUBCOOLING CIRCUIT OF nTH OUTDOOR UNIT
TLmin   : MINIMUM TEMPERATURE (°C) AT OUTLET LIQUID PIPE FROM SUBCOOLING CIRCUIT
TLmax   : MAXIMUM TEMPERATURE (°C) AT OUTLET LIQUID PIPE FROM SUBCOOLING CIRCUIT
ΔTset   : THRESHOLD VALUE (K) FOR VARIATIONS IN LIQUID PIPE TEMPERATURE
```

# FIG.6

```
START OF OPERATION
        │
        ▼
  DECISION ON
  CYCLE STABILITY
        │
        ▼
     ◇ nmax  ──False──▶  COMPUTE
     =1 ◇                TLmin,TLmax
     True │                   │
          │                   ▼
          │            ◇ TLmax─TLmin ◇ ──False──▶  n=1
          │            ◇  <ΔTset  ◇                  │
          │                True │                     ▼
          │                     │              ◇ TLmax─TL(n)<ΔTset ◇ ──False──▶  INCREASE
          │◀────────────────────┘                  True │                        COMPRESSOR
          │                                              │                        FREQUENCY
          │                                              ▼                            │
          │                                    ◇ TL(n)─TLmin<ΔTset ◇ ──False──▶  REDUCE
          │                                         True │                       COMPRESSOR
          │                                              │                       FREQUENCY
          │                                              ▼◀─────────────────────────┘
          │                                           n=n+1
          │                                              │
          ▼                                              ▼
  DECISION ON                                      ◇ n>nmax ◇ ──False──┐
  AMOUNTS OF                                        True │
  REFRIGERANT
```

# FIG.7

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 4285583 B
- JP 2009019875 A
- EP 2068101 A